# EUROPEAN PATENT SPECIFICATION

(11) **EP 0 400 250 B1**
(45) Date of publication and mention of the grant of the patent: **21.09.1994**
(21) Application number: 89560004.7
(22) Date of filing: 29.12.1989
(51) Int. Cl.: G09F 19/02, G09F 19/22

(54) **Device for inserting publicity on continuous modular conveyor belts**
Einrichtung zum Aufbringen von Werbung auf ununterbrochenene bausteinartige Förderbänder
Dispositif pour l'insertion de publicité sur les bandes transporteuses continues modulaires

(43) Date of publication of application: 05.12.1990
(73) Proprietor: IAP (INTERNATIONAL AIRPORT PROMOTION) N.V., Willemstad, Curacao (AN); Schröder, Heinz-Joachim Ernst, E-46003 Valencia (ES)
(72) Inventor: Münkner, Jurgen Richard, E-46003 Valencia (ES)
(74) Representative: van Westenbrugge, Andries

(56) References cited:
- GB-A- 2 044 715
- US-A- 3 881 592

## Description

The invention relates to the field of continuous modular conveyor belts, such as known from US-A-3881592.

Such conveyor belts carry the luggage of air travellers, after their arrival at the airport. Therefore, such conveyor belts are in the centre of attention for members of the public waiting for their suitcases to appear. This moment demands a great deal of attention due to the similarity in shape and colour of the suitcases on the market.

According to the invention, use is made of this attenion of the public to present publicity by providing a combination comprising a continuous modular conveyor belt, at least one publicity and a device for inserting said publicity, whereby the device is made of a sectional adhesive sheet, or similar, the length of the sections together being larger than the maximum longitudinal dimension of one of the units of the conveyor belt on which the sheet is placed, the device adopting various different positions during the cycle of the conveyor belt, and each publicity being legible only either in the sections in which the belt adopts an aligned position, or in the sections in which the belt adopts a curved position.

The invention will be explained further with reference to an embodiment of a device represented in the figures.

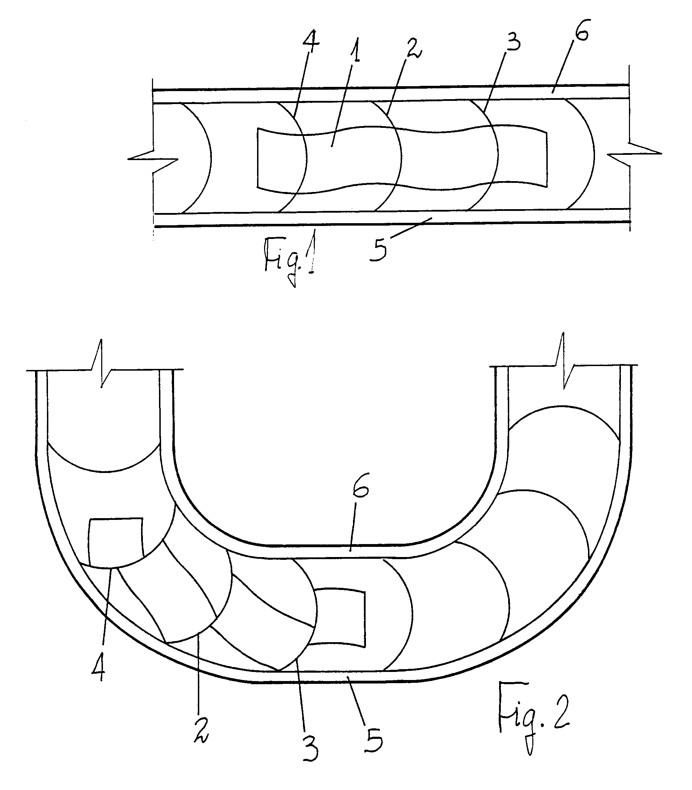

Figure 1 shows a straight section from a conveyor belt of this type, 5 and 6 indicate the tracks between which the conveyor belt travels, the bill or advertisement is represented by 1, each of the pieces that go to make up the belt is articulated by a radial piece, the outlines of which are indicated by 2, 3, and 4, and they are articulated to enable the belt to turn.

Figure 2 shows a turning point of the belt where we can see, indicated by 2, 3 and 4, the units on which the advertisement is placed and which are not correctly aligned at this point. These slot into place again once the conveyor belt is on the straight section. This device attracts the public whose attention is drawn to both the contents of the conveyor belt as well as what is on it.

Obviously, the reverse may be true, in other words, the slogans could appear incorrectly alined on the straight sections of conveyor belt, slotting back into place upon reaching a curved section and adopting the original shape of the advertisement.

This may also be complemented by small advertisements no bigger than one of the units, legible at all times, even for those standing near the corners.

And it is also possiblle to combine both, in other words, legible and illegible bills, with fixed ones that present specific information in relation to what may be required.

The characteristics of this invention having been explained, the protection of the same is specified in the following claim.

## Claims

1. A combination comprising a continuous modular conveyor belt, at least one publicity (1) and a device for inserting said publicity (1), whereby the device is made of a sectional adhesive sheet, or similar, the length of the sections together being larger than the maximum longitudinal dimension of one of the units of the conveyor belt on which the sheet is placed, the device adopting various different positions during the cycle of the conveyor belt, and each publicity being legible only either in the sections in which the belt adopts an aligned position, or in the sections in which the belt adopts a curved position.

## Patentansprüche

1. Kombination mit einem ununterbrochenen bausteinartigen Förderband, mindestens einer Werbung (1) und einer Einrichtung zum Aufbringen der Werbung (1), wobei die Einrichtung aus einem abschnittsweise adhäsiven Flächengebilde, oder ähnlichem, gemacht ist, wobei die Länge der Abschnitte zusammen größer ist als die maximale Längsausdehnung einer der Einheiten des Förderbands, auf welchem das Flächengebilde angeordnet wird, wobei die Einrichtung während des Umlaufs des Förderbands verschiedene unterschiedliche Positionen einnimt, und wobei jede Werbung nur entweder in den Abschnitten, in denen das Band eine ausgerichtete Position einnimt, oder in den Abschnitten lesbar ist, in denen das Band eine gekrümmte Position einnimt.

## Revendications

1. Ensemble comprenant une courroie de convoyeur modulaire continue, au moins une publicité (1) ou un dispositif pour insérer ladite publicité (1), le dispositif étant constitué d'une feuille adhésive en sections ou analogue, la longueur des sections réunies étant plus grande que la dimension longitudinale maximale d'une des unités de courroie du convoyeur sur laquelle se trouve ladite feuille, le dispositif prenant différentes positions variables au cours du cycle de la courroie de convoyeur et chaque publicité étant lisible uniquement soit dans les sections dans lesquelles la courroie adopte une position plan, soit dans les sections dans lesquelles la courroie adopte une position incurvée.
